# EUROPÄISCHE PATENTSCHRIFT

(11) **EP 4 052 550 B1**
(45) Veröffentlichungstag und Bekanntmachung des Hinweises auf die Patenterteilung: **06.12.2023**
(21) Anmeldenummer: 21161080.3
(22) Anmeldetag: 05.03.2021
(51) Int. Cl.: A01B 39/16, A01B 39/18, A01B 39/20, A01G 17/00

(54) **SEITENHANGAUSGLEICHSVORRICHTUNG FÜR DEN WEINANBAU**
GRADIENT COMPENSATION DEVICE FOR VITICULTURE
DISPOSITIF DE COMPENSATION DE LA SUSPENSION LATÉRALE POUR LA VITICULTURE

(43) Veröffentlichungstag der Anmeldung: 07.09.2022
(73) Patentinhaber: Clemens GmbH & Co. KG, Weinbautechnik - Getränketechnik, 54516 Wittlich (DE)
(72) Erfinder: CLEMENS, Bernhard, 54533 Greimerath (DE)
(74) Vertreter: Hannke, Christian

(56) Entgegenhaltungen:
- EP-A1- 2 062 472
- DE-A1- 3 546 288
- FR-A1- 2 555 860
- US-A- 3 117 632
- US-A- 4 384 618

## Beschreibung

Maschine für die Bodenbearbeitung zur Anordnung an ein Zugfahrzeug, wobei bei Fahrt des Zugfahrzeugs in einer Fahrtrichtung ein Bodenbereich mit einem Bodenbearbeitungswerkzeug in einem Zwischenraum zwischen mindestens zwei seitlich vom Zugfahrzeug gelegenen Hindernissen bearbeitbar ist, wobei die Maschine eine Steuerungsvorrichtung besitzt, mit der das Bodenbearbeitungswerkzeug in den Zwischenraum hinein- und hinausschwenkbar und/oder in einer Querrichtung zur Maschine hin und/oder von der Maschine weg in den Zwischenraum bewegbar ist, wobei die Steuerungsvorrichtung eine Stellvorrichtung umfasst, welche ein Hinein- und Hinausschwenken und/oder Bewegen des Bodenbearbeitungswerkzeuges in der Querrichtung nach Detektion eines Hindernisses um einen Stellbetrag bewirkt.

Maschinen dieser Art finden überwiegend in der Landwirtschaft Anwendung, vor allem jedoch im Obst- und Weinanbau, oder bei der Bearbeitung von Reihenkulturen. Im Obst- und Weinanbau ist es erforderlich Bodenbereiche zwischen Pflanzen und bevorzugt zwischen Pflanzen in Reihenkulturen zu bearbeiten. Um die Bearbeitung der Bodenbereiche mit einem landwirtschaftlichen Fahrzeug, welches parallel zu den Reihenkulturen fährt, zu ermöglichen, betätigt das Landwirtschaftliche Fahrzeug eine Maschine wie sie zuvor beschrieben wurde. Durch die Zurückschwenkbarkeit des Bodenbearbeitungswerkzeuges bei Detektion eines Hindernisses wird verhindert, dass das Bodenbearbeitungswerkzeug mit den Pflanzen der Reihenkulturen, oder mit sonstigen Hindernissen, kollidiert.

Das Bodenbearbeitungswerkzeug ist bevorzugt als seitlicher Ausleger der Maschine angeordnet. Vorzugsweise ist das Bodenbearbeitungswerkzeug entweder vom Fahrzeug weggerichtet, oder, wie zum Beispiel bei Hochradschleppern, das Bodenbearbeitungswerkzeug wird unter der Maschine entlanggeführt. Dies bedeutet, dass mit dem Bodenbearbeitungswerkzeug ein Bodenbereich neben mindestens einer Fahrspur des landwirtschaftlichen Fahrzeugs bearbeitbar ist. Dieser Bodenbereich ist insbesondere ein Bodenbereich zwischen zwei Pflanzen einer Pflanzreihe der Reihenkultur. Viele Pflanzen, insbesondere Weinreben, aber auch andere Obstpflanzen reagieren sehr empfindlich auf das Anfahren des Pflanzenstammes mit einem Bodenbearbeitungswerkzeug. Das Anfahren des Pflanzenstammes wird durch die Hinderniserkennung und das Zurückschwenken des Bodenbearbeitungswerkzeugs bei Erkennung eines Hindernisses verhindert. So wird auch verhindert, dass das Wurzelwerk der Pflanze durch das Bodenbearbeitungswerkzeug beschädigt wird. Die Hinderniserkennung erfolgt in der Regel durch einen dem Bodenbearbeitungswerkzeug voreilenden Sensor, welcher ein Hindernis erkennt und somit das Zurückschwenken des Bodenbearbeitungswerkzeugs auslöst. Nach Passieren des Hindernisses, oder einer gewissen Zeit, was bei konstanter Fahrgeschwindigkeit einer bestimmten Wegstrecke entspricht, schwenkt das Bodenbearbeitungswerkzeug automatisch wieder in seine Ausgangslage zurück.

Maschinen, wie sie aus dem Stand der Technik bekannt sind, geraten bei Fahrten auf Untergrund mit einer seitlichen Hangneigung in Bezug auf die Querrichtung des Fahrzeugs an ihre Grenzen. Da Pflanzen immer parallel zu einer vertikalen Richtung, welche dem Erdmittelpunkt entspringt, wachsen, tun sie dies auch auf einem Untergrund mit einer Hangneigung. Dadurch entsteht ein Winkel zwischen Pflanze und der Normalen des Untergrunds mit Hangneigung. Durch die effektive Schrägstellung der Pflanzen im Vergleich zu der Maschine, kann es dazu kommen, dass der Sensor, welcher in der Querrichtung vorzugsweise gleich lang ist wie das Bodenbearbeitungswerkzeug, nun näher, oder weiter entfernt von Pflanzen verläuft als das Bodenbearbeitungswerkzeug. Dies ist dadurch begründet, dass die Querrichtung durch die Schiefstellung der Pflanzen nicht mehr orthogonal zur Vertikalrichtung verläuft und somit der Abstand vom Befestigungspunkt des Hindernissensors an der Drehachse D bis zum Hindernis länger und/oder kürzer ist, als der Abstand vom Befestigungsunkt des Bodenbearbeitungswerkzeugs an der Drehachse D bis zum Hindernis. Auf der in der Querrichtung dem Hang zugewendeten Seite (Bergseite) der Maschine ist es dadurch möglich, dass im schlimmsten Fall eine Pflanze gar nicht detektiert wird, wobei das Bodenbearbeitungswerkzeug diese Pflanze bereits kontaktiert, oder das Bodenbearbeitungswerkzeug zu dicht an der Pflanze vorbeigeführt wird und somit einen Sicherheitsabstand zur Pflanze nicht einhält. Auf der in der Querrichtung dem Hang abgewendeten Seite der Maschine (Talseite) ist es möglich, dass der Sensors einen kleineren Abstand zur Pflanze hat als das Bodenbearbeitungswerkzeug und somit das Bodenbearbeitungswerkzeug zu weit entfernt von der Pflanze um diese herumgeführt wird und dadurch der Bereich um die Pflanze nicht wirksam bearbeitet wird.

In der Druckschrift FR 2 555 860 A1 wird bereits ein System offenbart, bei welchem ein Hindernissensors manuell eingestellt werden kann, sodass er bezüglich des Bodenbearbeitungswerkzeugs weiter in Fahrtrichtung nach vorne oder hinten verschoben werden kann. Dadurch kann ein Bodenbearbeitungswerkzeug mit einem geringeren Abstand um Pflanzen in der Reihenkultur herum geführt werden und dadurch ein nicht bearbeiteter Bodenbereich zwischen Pflanzen minimiert werden. Die Justierung des Hindernissensors erfolgt jedoch mechanisch und manuell und muss demnach bei wechselnden Hanglagen stets nachjustiert werden, was vor allem unter Betrachtung der benötigten Zeit zum Justieren nicht zufriedenstellend ist.

Es ist daher die Aufgabe der Erfindung eine Maschine bereitzustellen, mit welcher eine Bodenbearbeitung zwischen parallel zur Fahrtrichtung angeordneten Pflanzen in Reihenkulturen möglich ist, ohne dass bei seitlichen Hangneigungen die Gefahr einer Kollision zwischen Bodenbearbeitungswerkzeug und Reihenkultur besteht und bevorzugt auch alle Bereiche zwischen den Pflanzen möglichst effizient bearbeitet werden können. Diese Aufgabe wird gelöst durch eine Maschine gemäß dem Anspruch 1 sowie ein Verfahren zum Steuern eines Bodenbearbeitungswerkzeugs nach Anspruch 12.

Die Erfindung ist dadurch gekennzeichnet, dass die Steuerungsvorrichtung weiterhin eine Regulierungsvorrichtung enthält, die einem von einem Lagesensor gemessenen Wert einen Stellbetrag zuordnet und diesen Stellbetrag an die Stellvorrichtung übermittelt, wobei der vom Lagesensor gemessene Wert ein Neigungswinkel ist, der einem Hangwinkel entspricht, welcher zwischen der Querrichtung und einer waagerechten Ebene existiert, wobei diese waagerechte Ebene orthogonal zu einer lotrechten Vertikalrichtung existiert, welche dem Erdmittelpunkt entspringt, oder der einem Lotwinkel entspricht, welcher zwischen der Vertikalrichtung und einer senkrecht auf der Querrichtung stehenden Höhenrichtung existiert.

Die Begriffe Hangwinkel und Lotwinkel beziehen sich auf Grund der Orthogonalität von Querrichtung und Höhenrichtung sowie der Orthogonalität von Vertikalrichtung und der waagerechten Ebene auf denselben Winkelbetrag. Lediglich der Bezugspunkt der Messung unterscheidet sich. Im Sinne dieser Patentanmeldung ist daher bei einer Messung des Hang- oder Lotwinkels auch immer die Messung des jeweils anderen Winkels denkbar.

Durch die Regulierbarkeit des Stellbetrags während einer Bodenbearbeitungsfahrt, kann der Stellbetrag jederzeit an den aktuellen Hangwinkel angepasst werden. Die Regulierung des Stellbetrags wird erfindungsgemäß automatisch auf Basis eines Sensorwertes während der Bodenbearbeitungsfahrt durchgeführt und bedarf daher keiner manuellen Betätigung eines Schaltelements. Dies bedeutet, dass die Bodenbearbeitung zum nachregulieren des Stellbetrags nicht unterbrochen werden muss und der Führer der Maschine keine manuelle Regulierung über ein Schaltelement vornehmen muss.

Bei der Schwenkbewegung findet eine Drehung des Bodenbearbeitungswerkzeugs um eine, zu einer Höhenrichtung der Maschine parallel verlaufenden Drehachse statt, wobei das Bodenbearbeitungswerkzeug aus der senkrecht zur Fahrtrichtung und senkrecht zur Höhenrichtung angeordneten Querrichtung entgegengesetzt zur Fahrtrichtung zurückgeschwenkt wird. Alternativ hierzu ist es denkbar, dass statt der Schwenkbewegung eine Linearbewegung des Bodenbearbeitungswerkzeugs hin zur Maschine stattfindet. In dieser Variante wird das Bodenbearbeitungswerkzeug bevorzugt in Querrichtung und aus seiner Position als Ausleger zur Maschine hin bewegt. Hierbei ist auch denkbar, dass das Bodenbearbeitungswerkzeug in die Maschine eingezogen wird. Außerdem denkbar ist eine Kombination aus Schwenk- und Linearbewegung des Bodenbearbeitungswerkzeugs. Wenn im Folgenden von einem Zurückschwenken oder einer Schwenkbewegung des Bodenbearbeitungswerkzeugs gesprochen wird, ist auch immer eine alternative Linearbewegung oder einer Kombination von Linear- und Schwenkbewegung denkbar.

Das Bodenbearbeitungswerkzeug umfasst bevorzugt ein Schar, welches durch Unterschneidung der Erdoberfläche Unkraut umlegt und somit wirksam bekämpft. Je nach Anwendungsbereich kann eine Unterschneidung der Erdoberfläche von bis zu 250 mm angewendet werden. Bevorzugt kann das Bodenbearbeitungswerkzeug auch weitere Werkzeugkomponenten umfassen, möglich wären z.B. Kreisel, Pflüge oder Grubber, aber auch alle anderen Arten von bekannten Werkzeugkomponenten und Werkzeugkombinationen sind denkbar.

Bevorzugt bearbeitet das Bodenbearbeitungswerkzeug im zurückgeklappten Zustand einen schmaleren Bodenbereich (gemessen entlang der Querrichtung) als in der Ausgangslage. Durch das Zurückschwenken des Bodenbearbeitungswerkzeugs zur Maschine und/oder das hin und weg Bewegen von den Pflanzen der Reihenkultur (betrachtet entlang der Querrichtung), liegt der schmalere Bodenbereich direkt neben der Fahrspur der Maschine, ist aber von der Reihenpflanzung bezüglich der Querrichtung beabstandet. So wird eine Kollision zwischen Bodenbearbeitungswerkzeug und den Pflanzen der Reihenpflanzung wirksam verhindert.

Es ist außerdem denkbar, dass das Bodenbearbeitungswerkzeug die Bodenbearbeitung stoppt, sowie es zurückgeklappt wird. Bevorzugt setzt das Bodenbearbeitungswerkzeug in dieser Ausführungsform die Bodenbearbeitung fort sowie es in seine Ausgangslage zurückkehrt.

Gemäß zumindest einer weiteren Ausführungsform umfasst die Steuerungsvorrichtung eine Bewegungsvorrichtung, mit welcher das Bodenbearbeitungswerkzeug schwenkbar ist und/oder in die Querrichtung bewegbar ist. Weiterhin umfasst die Steuerungsvorrichtung einen durch die Stellvorrichtung steuerbaren Signalgeber, mit welchem die Bewegungsvorrichtung ansteuerbar ist, wobei der Signalgeber lediglich mittelbar über die Stellvorrichtung mit dem Hindernissensor verbunden ist. Das Signal des Hindernissensors wird also immer zuerst an die Stellvorrichtung übermittelt und dann an die Ansteuerung des Bodenbearbeitungswerkzeuges, bestehend aus dem Signalgeber und der Bewegungsvorrichtung, weitergegeben. Durch die Stellvorrichtung wird ein Stellbetrag bestimmt, welcher einem Weg entspricht um den das Bodenbearbeitungswerkzeug in Querrichtung Q nach Detektion eines Hindernisses geschwenkt und/oder in der Querrichtung bewegt wird. Das Stellsignal wird dann dem Signalgeber übermittelt, wobei dieser entsprechend dem Stellbetrag das Bodenbearbeitungswerkzeug in der Querrichtung schwenkt und/oder bewegt. Dabei ist der Signalgeber bevorzugt als Elektromagnetventil ausgeführt. Bevorzugt ist die Bewegungsvorrichtung ein einfach- oder doppeltwirkender Hydraulikzylinder, es ist jedoch auch denkbar andere Schwenkantriebe, wie zum Beispiel ein Servomotor, einen Radialkolbenmotor oder ähnliche Antriebe zu verwenden. Bei Verwendung eines Servomotors als Bewegungsvorrichtung wäre ein entsprechender Signalgeber ein Motorkontroller.

Gemäß zumindest einer weiteren Ausführungsform kann die Bewegungsvorrichtung der Steuerungsvorrichtung weiterhin auch eine Kippvorrichtung betätigen mit welcher die Drehachse in einem Winkel, bevorzugt aber parallel zur Vertikalrichtung ausgerichtet werden kann. Vielmehr ist die Bewegungsvorrichtung in diesem Fall bevorzugt als Verstellelement der Kippvorrichtung ausgebildet. Vorzugsweise ist das Verstellelement so ausgelegt, dass eine Kontraktion oder Verlängerung in Längsrichtung des Verstellelementes möglich ist. Dadurch würde vorzugsweise der Betrag festgelegt werden, um welchen die Maschine, beziehungsweise das Bodenbearbeitungswerkzeug um die Kippachse geschwenkt wird. Es ist denkbar, dass durch das Kippen der Drehachse aus der Höhenrichtung in eine Parallele Richtung zur Vertikalrichtung das Problem der unterschiedlichen Abstände von Hindernissensor und Bodenbearbeitungswerkzeug zum Hindernis gelöst wird, da durch das Kippen der Hindernissensor und das Bodenbearbeitungswerkzeug wieder orthogonal zur Vertikalrichtung verlaufen. Da vorzugsweise der Hindernissensor und das Bodenbearbeitungswerkzeug gleich weit von der Drehachse zum Hindernis hinausragen, haben durch das Kippen der Drehachse in eine parallele Richtung zur Vertikalachse beide einen gleichen Abstand zum Hindernis.

Gemäß zumindest einer weiteren Ausführungsform ist mit dem Lagesensor der Hang- oder Lotwinkel kontinuierlich messbar, wodurch mit der Regulierungsvorrichtung der Stellbetrag automatisch und kontinuierlich in Abhängigkeit des Hang- oder Lotwinkels regulierbar ist. Die Einstellung des Stellbetrags geschieht demnach vollautomatisch nach dem vom Lagesensor fortlaufend erfassten Hang- oder Lotwinkel. Dem zeitlich fortlaufend, also kontinuierlich erfassten Hang- oder Lotwinkel wird von der Regulierungsvorrichtung dann fortlaufend ein Stellbetrag zugeordnet. Somit wird sichergestellt, dass jederzeit der optimale Stellbetrag in der Stellvorrichtung eingestellt ist. Hierdurch wird eine Kollision der Bodenbearbeitungsvorrichtung mit einem Hindernis besonders effektiv vermieden. Der Lagesensor kann als Winkelsensor, als Gyrosensor oder auch als GPS-basierter Sensor ausgeführt sein, grundsätzlich ist aber auch jede andere geeignete Messung des Hang- oder Lotwinkels denkbar. Bevorzugt wird ein beliebiges, digitales Triangulationssystem zur Positionsermittlung verwendet.

Es ist denkbar, dass die Regulierungsvorrichtung den Stellbetrag in Abhängigkeit von Daten aus einer Datenbank bestimmt. In dieser Ausführungsform würde die Datenbank zumindest ein Steigungsprofil des Bereichs enthalten auf dem die Pflanzen stehen. Vorzugsweise können entsprechende Daten aus der Datenbank auch approximiert werden um einen genaueren Wert zwischen zwei Messpunkten zu erhalten.

Es ist denkbar, dass der Schritt der Zuordnung eines Stellbetrags zu einem Hangwinkel durch die Regulierungsvorrichtung innerhalb eines Intervalls kontinuierlich durchführbar ist. Bevorzugt entspricht der Stellbetrag einer Strecke in der Querrichtung, um welche das Bodenbearbeitungswerkzeug mehr oder weniger geschwenkt und/oder bewegt wird. Es ist denkbar, dass eine untere Grenze des Stellbetrags null Zentimeter ist, wobei bei diesem Wert das Bodenbearbeitungswerkzeug bei Detektion eines Hindernisses in seiner Ausgangsposition bleibt und nicht schwenkt und/oder zur Maschine hin bewegt wird. Bevorzugt ist von diesem unteren Wert aus jeder positive Wert kontinuierlich einstellbar. Es ist denkbar, dass der Stellbetrag auf der, dem Hang abgewandten Seite (Talseite), stets kleiner ist, als auf der, dem Hang zugewandten Seite (Bergseite). Vorzugsweise entspricht der maximale Stellbetrag dem Wert um den das Bodenbearbeitungswerkzeug maximal in die Querrichtung geschwenkt und/oder bewegt werden kann.

Gemäß zumindest einer weiteren Ausführungsform werden in der Steuerungsvorrichtung zusätzlich zu den Signalen des Lagesensors und eines Hindernissensors auch die aktuelle Fahrgeschwindigkeit des Fahrzeugs, die aktuelle Position des Bodenbearbeitungswerkzeugs, sowie ein Abstand zwischen der Maschine und Hindernissen in Querrichtung Q erfasst, wobei der Abstand zwischen Maschine und Hindernissen vorzugsweise von einem geeigneten Entfernungssensor gemessen wird. Bevorzugt wird dieser Abstandswert berücksichtigt beim Ansteuern der Bewegungsvorrichtung. Es ist denkbar, dass zusätzlich zu der Hangwinkelkorrektur auch der Abstand des Fahrzeugs in Querrichtung zur Reihenkultur bei der Bestimmung des Stellbetrags eine Rolle spielt. Vorzugsweise muss bei einer Maschine welche auf einer Seite näher an einer Reihenkultur vorbei fährt als auf der anderen, auf der Seite mit der Sie näher an der Reihenkultur fährt das Bodenbearbeitungswerkzeug weiter zurückgeschwenkt werden, als auf der Seite wo die Pflanzen weiter entfernt von der Maschine liegen.

Zusätzlich ist es möglich einen Distanzwert zu hinterlegen, wobei dieser Distanzwert ein fester Wert ist, der definiert in welchem Abstand vor einem detektierten Hindernis das Bodenbearbeitungswerkzeug zurückgeschwenkt werden soll. Bevorzugt definiert dieser Distanzwert ebenfalls in welchem Abstand nach einem detektierten Hindernis das Bodenbearbeitungswerkzeug wieder in den Bereich zwischen zwei Hindernissen hineingeschwenkt wird. Die aktuelle Position des Bodenbearbeitungswerkzeugs beinhaltet bevorzugt auch eine Eintauchtiefe des Bodenbearbeitungswerkzeugs in den Boden, in anderen Worten die Unterschneidungstiefe.

Auf Basis aller Informationen bestimmt die Regulierungsvorrichtung einen aktuellen Stellbetrag, welcher dann in der Stellvorrichtung eingestellt wird. So wird sichergestellt, dass das Zurückschwenken immer im gewünschten optimalen Abstand zum Hindernis erfolgt. Bevorzugt geschieht das Zurückschwenken des Bodenbearbeitungswerkzeugs in die Querrichtung, je nach Art des Signals des Hindernissensors, nur teilweise. Dadurch wird vorzugsweise sichergestellt, dass das Bodenbearbeitungswerkzeug nur soweit wie nötig vom Hindernis entfernt an diesem vorbeigeführt wird, um eine Kollision zu vermeiden. In dieser Ausführungsform erfasst die Steuerungsvorrichtung auch die Position des Bodenbearbeitungswerkzeugs und die Art des Hindernissensorsignals (z.B. den Winkel der Auslenkung bei einem drehbaren Taststab). Es ist denkbar, dass auch der aktuelle Drehwinkel des Bodenbearbeitungswerkzeugs über einen Winkelgeber gemessen wird.

Gemäß zumindest einer weiteren Ausführungsform ist die Stellvorrichtung mit einem während der Bodenbearbeitungsfahrt manuell betätigbarem Schaltelement regulierbar, und die Stellvorrichtung als Regelelektronik ausgeführt. Bevorzugt ist die Stellvorrichtung elektronisch ausgeführt, wobei auch eine hydraulische Ausführung denkbar ist. Das Schaltelement ist bevorzugt in einer Fahrerkabine des Fahrzeugs angeordnet und der durch das Schaltelement eingestellte Wert entspricht einer Winkelvorgabe an die Regulierungsvorrichtung. Der Führer der Bodenbearbeitungsmaschine kann somit während der Fahrt das Schaltelement betätigen und einen Wert, welcher einem seitlichen Neigungswinkel und demnach einem entsprechenden Hangwinkel entspricht, manuell einstellen.

In einer bevorzugten Ausführungsform ist das Schaltelement als Dreh- oder Schieberegler ausgeführt. Es ist jedoch auch eine rein elektronische Ausführung des Reglers denkbar, beispielsweise als Touchscreen.

Gemäß zumindest einer weiteren Ausführungsform ist der Hindernissensor als mechanischer Taster ausgeführt, wobei eine Detektion eines Hindernisses bei Überschreitung einer Mindestbetätigung des Tasters erfolgt.

Gemäß zumindest einer weiteren Ausführungsform ist der Taster als von der Fahrtrichtung in die Querrichtung und parallel zum Boden rotierbarer Stab ausgeführt, wobei die Mindestbetätigung einem Mindestdrehwinkel um die Drehachse des Tasters und des Bodenbearbeitungswerkzeugs entspricht. Bevorzugt eilt der mechanische Taster dem Bodenbearbeitungswerkzeug vor, wobei das Voreilen in Bezug auf die Fahrrichtung betrachtet wird. Bevorzugt ist die Voreilung des rotierbaren Stabs über eine Lochscheibe mit Rastbolzen einstellbar. Über die Voreilung ist der Abstand um ein Hindernis herum einstellbar, welcher bei einer Bodenbearbeitungsfahrt nicht bearbeitet wird, wobei dieser Abstand auch als nicht bearbeitete Insel bezeichnet wird. Vorzugsweise wird durch die Voreilung des Tasterstabes die Position der Insel verändert, wobei der Abstand auf der einen Seite (z.B. vor dem Hindernis) sich um den Betrag der Vergrößerung des Abstandes auf der anderen Seite des Hindernisses (z.B. nach dem Hindernis) reduziert. Durch die Stellvorrichtung wird das Einhalten des Abstandes zum Hindernis auch in einer seitlichen Hanglage sichergestellt. Die Ausführung des Hindernissensors als mechanischer Taster oder als rotierbarer Stab, stellt eine besonders einfache und bewährte, sowie robuste Ausführung des Hindernissensors dar.

Gemäß einer weiteren Ausführungsform ist der Hindernissensor als kontaktloser Sensor ausgeführt. Bevorzugt ist der kontaktlose Sensor ein Ultraschallsensor, ein Reflexlichtschalter, ein Lasersensor, ein 3D-Lasersensor, ein Kamerasystem oder ein digitales Triangulationssystem zur Positionsermittlung mit hinterlegten Kartendaten. Hierbei sind jedoch auch weitere kontaktlose Sensorsysteme denkbar. Durch die Ausführung des Hindernissensors als kontaktloser Sensor wird eine Berührung des Hindernisses komplett vermieden. Dies kann insbesondere in Obstreihenpflanzungen von Vorteil sein, da einige Obstpflanzen besonders empfindlich auf ein Anfahren reagieren. Auch werden gegebenenfalls fragile Vorrichtungen wie dünne Stäbe oder Drähte, welche zur Reihenerziehung der Pflanzen verwendet werden und ebenfalls Hindernisse darstellen können, geschont.

Gemäß einer weiteren Ausführungsform sind das Bodenbearbeitungswerkzeug und der Hindernissensor an der Drehachse befestigt, woraus sich ein Abstand A, welcher die Distanz zwischen einem Befestigungspunkt des Hindernissensors an der Drehachse und einem Hindernis beschreibt, und ein Abstand B, welcher die Distanz zwischen einem Befestigungspunkt des Bodenbearbeitungswerkzeugs an der Drehachse und einem Hindernis beschreibt, ergibt. Das Bodenbearbeitungswerkzeug und der Hindernissensor schwenken demnach vorzugsweise um dieselbe Drehachse, wobei die Hindernisse die jeweils in der Vertikalrichtung wachsenden Pflanzen der Reihenkultur sind.

Gemäß einer weiteren Ausführungsform bewirkt ein Hangwinkel bei Reihenkulturen, die parallel der Vertikalrichtung wachsen, einen Wegunterschied vom Abstand A zum Abstand B, wobei der Stellbetrag von der Regulierungsvorrichtung so bestimmt wird, dass er diesen Wegunterschied kompensiert. Es ist denkbar, dass auf der Seite der Maschine, welche dem Hang in der Querrichtung abgewandt ist (Talseite), der Abstand A kleiner ist als Abstand B, und dass auf der Seite der Maschine, welche dem Hang in Querrichtung Q zugewandt ist (Bergseite), der Abstand A größer ist, als Abstand B. Auf der Bergseite ist es demnach erforderlich den Stellbetrag zu vergrößern. Alternativ wird der Stellbetrag auf der Talseite vorzugsweise verkleinert, da das Bodenbearbeitungswerkzeug weiter von Hindernissen entfernt ist als der Hindernissensor.

Die Erfindung ist außerdem durch ein Verfahren zum Steuern eines Bodenbearbeitungswerkzeugs einer Maschine nach zumindest einem einer der hervorgehenden Ausführungsformen gekennzeichnet. Das Verfahren umfasst die Schritte:
a. Einstellen des Stellbetrags um den bei der Detektion eines Hindernisses während einer Bodenbearbeitungsfahrt das Bodenbearbeitungswerkzeuges mithilfe der Bewegungsvorrichtung geschwenkt und/oder in Querrichtung bewegt wird;
b. Detektion eines Hindernisses mit dem Hindernissensor;
c. Hinausschwenken und/oder Bewegen in Querrichtung zur Maschine des Bodenbearbeitungswerkzeugs aus dem Zwischenraum in Abhängigkeit vom Stellbetrag;
d. Hineinschwenken und/oder Bewegen in Querrichtung von der Maschine des Bodenbearbeitungswerkzeugs in den Zwischenraum durch die Steuerungsvorrichtung.

Erfindungsgemäß ist das Bestimmen des Stellbetrags durch die Regulierungsvorrichtung während einer Bodenbearbeitungsfahrt jederzeit möglich und zwar unabhängig davon, ob nach dem letzten Einstellen eine Detektion eines Hindernisses stattgefunden hat oder nicht. Es ist also denkbar, dass der Schritt a zunächst mehrfach ausgeführt wird, bevor die Schritte b bis d ausgeführt werden. Andersherum ist es auch denkbar, dass nach Ausführung der Schritte b bis d die Schritte b bis d mehrfach hintereinander ausgeführt werden, bevor eine neue Ausführung des Schrittes a erfolgt.

Gemäß einer bevorzugten Ausführungsform wird mit dem Lagesensor ein Hang- oder Lotwinkel fortlaufend gemessen und der Stellbetrag fortlaufend automatisch in Abhängigkeit des Hang- oder Lotwinkels mit der Regulierungsvorrichtung bestimmt. Hierbei wird bevorzugt der jeweils gemessene Hang- oder Lotwinkel an die Regulierungsvorrichtung in der Steuerungsvorrichtung übermittelt und anschließend dem aktuellen Hang- oder Lotwinkel von der Regulierungsvorrichtung ein Stellbetrag zugeordnet. Der so bestimme Stellbetrag wird anschließend der Stellvorrichtung übermittelt und somit in Abhängigkeit des gemessenen Hang- oder Lotwinkels der Stellbetrag in der Stellvorrichtung automatisch eingestellt, wobei die Stellvorrichtung anschließend dem Signalgeber mitteilt um welchen Betrag er die Bewegungsvorrichtung bewegen muss.

Gemäß einer bevorzugten Ausführungsform wird das Signal vom Lagesensor mit mindestens einem Filter entrauscht um Unebenheiten im Boden von einer tatsächlichen Änderung des Hangwinkels unterscheiden zu können. Bevorzugt geschieht dies bei automatischer und/oder kontinuierlicher Bestimmung des Stellbetrags durch die Regulierungsvorrichtung, da bei hoher Dynamik des Systems bereits kleine Unebenheiten dafür sorgen würden, dass der Stellbetrag ständig geändert wird und somit ein Prellen des Systems entstehen kann. Bevorzugt wird das Sensorsignal zeitlich in der Amplitude geglättet. Es ist auch denkbar, dass die Stärke der Glättung einstellbar ist um die Dynamik des Systems auf den jeweiligen Anwendungsfall und/oder Untergrund anzupassen.

Gemäß einer bevorzugten Ausführungsform wird im Vergleich zum eingestellten Stellbetrag bei ebener Fahrt, bei einer Fahrt mit seitlichem Hangwinkel der Stellbetrag auf der Talseite mit Hilfe der Regulierungsvorrichtung verringert und auf der, dem Berg zugewandten Seite der Stellbetrag (S) mit Hilfe der Regulierungsvorrichtung (11) vergrößert. Durch diese Art der Bestimmung des Stellbetrags wird bei jeder Hangneigung ein Zurückschwenken des Bodenbearbeitungswerkzeuges in einem konstanten Abstand des Bodenbearbeitungswerkzeuges zum Hindernis gewährleistet.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

Die Figuren zeigen:
- Fig. 1:: eine Übersichtsdarstellung der Maschine 1 angeordnet an einem Fahrzeug 2 bei der Bodenbearbeitung in einer Reihenkultur 5 aus Sicht in Fahrtrichtung von hinten;
- Fig. 2:: eine Darstellung der Maschine 1 an einem Fahrzeug 2 bei der Bodenbearbeitung in der Reihenkultur 5 in Aufsicht;
- Fig. 3a - c:: Schematische Darstellung des Bodenbearbeitungswerkzeugs 6 und des Hindernissensors 7 der Maschine 1 bei der Bodenbearbeitung mit Seitenhanglage;
- Fig. 4:: Organigramm-Darstellung der Steuerungsvorrichtung 8 mit dem Hindernissensor 7, dem Lagesensor 9 und dem Bodenbearbeitungswerkzeug 6;

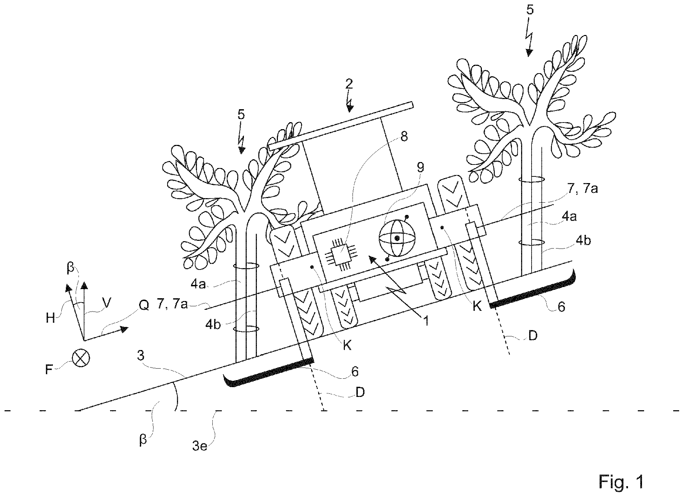

Figur 1 zeigt die Maschine 1, welche in Fahrtrichtung F hinter einem landwirtschaftlichen Fahrzeug 2 angeordnet ist, während der Bodenbearbeitung. Dabei ist die Fahrtrichtung F in Figur 1 insofern abgebildet, als dass sie in die Zeichnung hinein zeigt. Das landwirtschaftliche Fahrzeug 2 ist bevorzugt ein beliebiges landwirtschaftliches Zugfahrzeug 2, besonders bevorzugt ein Traktor, insbesondere ein Schlepper, ein Schmalspurtraktor, ein Hochradschlepper, eine Raupe, ein Unimog oder ein Geräteträger. Die Maschine 1 wird von dem landwirtschaftlichen Fahrzeug 2 über den Boden 3 bewegt. Dabei wird mit der Maschine 1 mit Hilfe des Bodenbearbeitungswerkzeuges 6 dieser Boden 3 bearbeitet.

Außerdem ist in Figur 1 der Zusammenhang zwischen den in die Vertikalrichtung V wachsenden Pflanzen 4a einer Reihenkultur 5 mit den dazugehörigen Pflanzstöcken 4b und der Höhenrichtung H erkennbar, wobei die Höhenrichtung H Senkrecht zum Boden 3 und damit auch senkrecht zur, parallel zum Boden 3 verlaufenden Querrichtung Q, verläuft. Daraus ergibt sich, dass zwischen der Höhenrichtung H und der Vertikalrichtung V der Hangwinkel β genauso existiert, wie er zwischen dem Boden 3 und einer waagerechten Ebene 3e existiert, wobei die waagerechte Ebene 3e wiederum orthogonal zu der lotrechten Vertikalrichtung V existiert.

In Figur 1 ist weiterhin die Position des Bodenbearbeitungswerkzeuges 6 und des Hindernissensors 7 in Relation zu den Pflanzen 4a und Pflanzstöcken 4b dargestellt. Es ist erkennbar, dass das Bodenbearbeitungswerkzeug 6 und der Hindernissensor 7 in dieser Ausführungsform auf derselben Drehachse D angeordnet sind, jedoch auf unterschiedlichen Positionen in der Höhenrichtung H. Die Darstellung in Figur 1 ist auf die wesentlichen Elemente der Erfindung beschränkt. Es ist jedoch denkbar, dass die Maschine 1 weitere Vorrichtungen wie Stützräder, zusätzliche Werkzeuge zur Vor- und/oder Nachbearbeitung, oder andere, aus der Landwirtschaft bekannte Gerätschaften beinhaltet.

Außerdem ist in Figur 1 auch die Kippachse K abgebildet um die die Drehachse D vorzugsweise gekippt werden kann um damit parallel bevorzugt zur Vertikalrichtung V ausgerichtet zu werden.

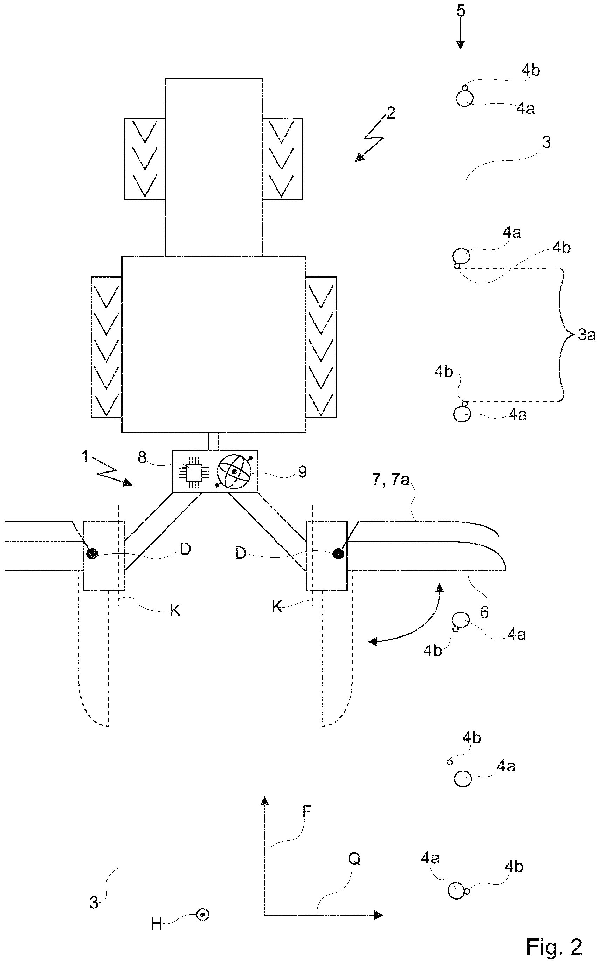

Figur 2 zeigt dieselbe Ausführungsform des landwirtschaftlichen Fahrzeugs 2 mit der Maschine 1 in Aufsicht; wobei das landwirtschaftliche Fahrzeug 2 in der dargestellten Ausführungsform die Maschine 1 und damit auch das Bodenbearbeitungswerkzeug 6 in Fahrtrichtung F zieht. Es ist jedoch auch denkbar, dass die Maschine 1 vor dem, oder seitlich am landwirtschaftlichen Fahrzeug 2 angeordnet ist. Die Maschine 1 kann somit an der Front, an dem Heck und/oder in einem Zwischenachsbereich des Fahrzeugs 2 angeordnet sein.

In der Aufsichtsdarstellung in Figur 2 ist zu erkennen, dass das Bodenbearbeitungswerkzeug 6 als seitlicher Ausleger in der Querrichtung Q der Maschine 1 angeordnet ist. Dadurch ist eine Bodenbearbeitung durch das Bodenbearbeitungswerkzeug 6 neben der Fahrspur des landwirtschaftlichen Fahrzeugs 2 möglich. Insbesondere ist es so möglich, dass bei Entlangfahren mit dem landwirtschaftlichen Fahrzeug 2 an einer Reihenkultur 5 ein Bodenbereich 3a zwischen den Pflanzen 4a mit dem Bodenbearbeitungswerkzeug 6 bearbeitbar ist. Um die Pflanzen 4a jedoch nicht zu beschädigen, ist es notwendig das Bodenbearbeitungswerkzeug 6 vor einer Kollision mit einer Pflanze 4a oder einem anderem beliebigen Hindernis 4 aus dem Bereich zwischen den Pflanzen 3a herauszuschwenken.

Das Schwenken des Bodenbearbeitungswerkzeuges 6, welches als seitlicher Ausleger in einer Querrichtung Q seitlich aus der Maschine 1 herausragend angeordnet ist, erfolgt durch Drehung desselben um die Drehachse D aus der Querrichtung Q nach hinten in der, der Fahrtrichtung F entgegengesetzten Richtung. Die Drehachse D ist hierbei parallel zu einer Höhenrichtung H und vorzugsweise orthogonal zur Kippachse K angeordnet. Die Höhenrichtung H steht senkrecht auf dem Boden 3, stellt also die Bodennormale dar, und zeigt in Figur 2 vom Boden 3 ausgehend aus der Zeichnung heraus nach oben. Die Kippachse K verläuft vorzugsweise parallel zur Fahrtrichtung F und ist bevorzugt dazu in der Lage das Bodenbearbeitungswerkzeug 6 um die Kippachse K zu drehen. Die resultierende Kippbewegung findet damit vorzugsweise in der Ebene statt, welche aus der Höhenrichtung H und der Querrichtung Q aufgespannt wird.

Um ein rechtzeitiges Herausschwenken aus dem Bodenbereich 3a des Bodenbearbeitungswerkzeuges 6 vor dem Kontakt mit einem Hindernis 4 zu gewährleisten, ist in Fahrtrichtung F vor dem Bodenbearbeitungswerkzeug 6 ein Hindernissensor 7 angeordnet. Der Hindernissensor 7 ist entweder als mechanischer Taster 7a oder aber als kontaktloser Sensor (hier nicht gezeigt) ausgeführt. In der hier dargestellten Ausführungsform fällt die Drehachse D des Bodenbearbeitungswerkzeugs 6 mit der Drehachse D des mechanischen Tasters 7a zusammen. Es ist jedoch auch denkbar, dass getrennte Drehachsen vorliegen. In diesem Fall sind die beiden Drehachsen bevorzugt parallel zueinander.

Durch die Anordnung des Hindernissensors 7 in Fahrtrichtung vor dem Bodenbearbeitungswerkzeug 6 ist der Hindernissensor 7 in der Lage ein Hindernis 4 zu erkennen bevor das Bodenbearbeitungswerkzeug 6 in Kontakt mit dem Hindernis 4 kommt. Das Bodenbearbeitungswerkzeug 6 kann somit rechtzeitig vor Kontakt mit dem Hindernis 4 entgegen der Fahrtrichtung F und somit nach hinten aus dem Bodenbereich 3a zwischen Hindernissen 4 herausgeschwenkt werden. Die Maschine 1 passiert dann das Hindernis 4 mit einem, sich im zurückgeschwenkten Zustand befindenden Bodenbearbeitungswerkzeug 6 (gestrichelte Linie in Figur 2). Nachdem die Maschine 1 mit dem Bodenbearbeitungswerkzeug 6 das Hindernis 4 passiert hat, schwenkt das Bodenbearbeitungswerkzeug 6 automatisch wieder in den Bodenbereich 3a zwischen den Hindernissen 4 hinein und nimmt damit wieder die Ausgangsposition als seitlicher Ausleger der Maschine 1 ein. Somit wird der Bodenbereich 3a vor und hinter dem Hindernis 4 bearbeitet, wobei ein gewisser Bereich um das Hindernis 4 herum unbearbeitet bleibt.

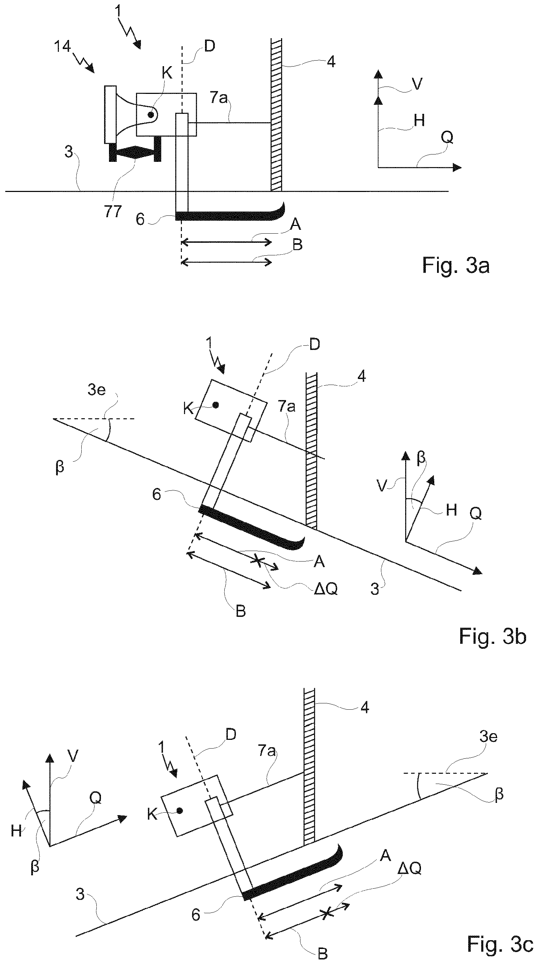

Die Figuren 3a bis 3c veranschaulichen die Problematik, welche sich bei einem Hangwinkel ≠ 0° in Querrichtung Q ergibt. Figur 3a zeigt ein Bodenbearbeitungswerkzeug 6 und einen Hindernissensor 7 bei Fahrt in Fahrtrichtung F auf einem Boden 3. Figur 3a zeigt das Bodenbearbeitungswerkzeug 6 bei Erreichen eines Hindernisses 4 in dem Moment unmittelbar vor dem Zurückschwenken des Bodenbearbeitungswerkzeuges 6 aus der Ausgangsposition. Der Hindernissensor 7, welcher hier exemplarisch als mechanischer Taster 7a dargestellt ist, hat zur Verdeutlichung der zugrundeliegenden Problematik in den Figuren 3a bis 3c die gleiche Länge in Querrichtung Q wie das Bodenbearbeitungswerkzeug 6. Zur besseren Veranschaulichung ist das, von der Maschine 1 aus gesehene, distale Ende des Tasters 7a in der Querrichtung Q soweit von der Maschine entfernt, wie das Hindernis 4. So ergeben sich ein Abstand A und ein Abstand B, wobei Abstand A den Weg vom Befestigungspunkt des Hindernissensors 7 an der Drehachse zum Kontaktpunkt mit dem Hindernis 4, und Abstand B den Weg vom Befestigungspunkt des Bodenbearbeitungswerkzeuges 6 an der Drehachse zum Kontaktpunkt mit dem Hindernis 4 beschreibt. Außerdem sind in Figur 3a die Abstände A und B gleich groß, da kein Hangwinkel β gegeben ist und somit die Vertikalrichtung V parallel zur Höhenrichtung H verläuft.

In Figur 3b findet die Bodenbearbeitung im Vergleich zu Figur 3a bei einem Hangwinkel β statt, wobei der Hangwinkel β den eingeschlossenen Winkel zwischen dem Boden 3 auf dem die Maschine 1 fährt, und einer Ebene 3e, welche senkrecht zur Vertikalrichtung V liegt, beschreibt. Die Abbildung der Maschine beschreibt die Seite der Maschine in Querrichtung Q, welche Talwärts gerichtet ist. Der Hangwinkel β ist, durch die gegebenen Korrelation der Richtungen, auch zwischen der Höhenrichtung H und der Vertikalrichtung V eingeschlossen. Dadurch verläuft auch die Drehachse D nicht mehr Parallel zu der Vertikalrichtung V, in der die Hindernisse 4 angeordnet sind, und demzufolge sind die Abstände A und B auch nicht gleich groß. In Figur 3b wurde angenommen, dass der Abstand B im Vergleich zu Figur 3a gleich bleibt. Durch den Hangwinkel β ist erkennbar, dass der Abstand A in Figur 3b kleiner ist, als in Figur 3a, woraus sich ein Wegunterschieg ΔQ zwischen dem Abstand A und dem Abstand B ergibt. Zusätzlich kann es sein, dass das Bodenbearbeitungswerkzeug 6 durch den Hangwinkel β soweit vom Hindernis weggeführt wird, dass es kaum noch, beziehungsweise gar nicht das Hindernis 4 bei Fahrt in Fahrtrichtung F kontaktieren würde. Daraus ist ersichtlich, dass der Betrag der Schwenkbewegung um die D Achse im Vergleich zu Figur 3a kleiner ist um einen Abstand zum Hindernis 4 einzuhalten. Aus dem Kontext ist erkennbar, dass der Stellbetrag S verkleinert werden muss, um das Bodenbearbeitungswerkzeug 6 im gleichen Abstand am Hindernis 4 vorbeizuführen wie in Figur 3a. Vorzugsweise ist an der Maschine 1 auch ein Entfernungssensor (hier nicht abgebildet) angebracht, welcher die Entfernung von der Maschine 1 zum Hindernis 4 misst, und die Steuerungsvorrichtung (hier ebenfalls nicht abgebildet) auf Basis der gemessenen Entfernung und des Hangwinkels β, das Bodenbearbeitungswerkzeug 6 entsprechend ansteuert.

In Figur 3c findet die Bodenbearbeitung wieder bei einem Hangwinkel β statt, in Vergleich zu Figur 3b zeigt die Figur 3c jedoch die, dem Berg Zugewandte Seite der Maschine 1. Dadurch verläuft auch in der Figur 3c die Drehachse D nicht parallel zu der Vertikalrichtung V, in der die Hindernisse 4 angeordnet sind, und demzufolge sind die Abstände A und B auch nicht gleich groß, woraus sich wiederum ein Wegunterschieg ΔQ zwischen dem Abstand A und dem Abstand B ergibt. In Figur 3c wurde angenommen, dass der Abstand A im Vergleich zu Figur 3a gleich bleibt. Durch den Hangwinkel β ist erkennbar, dass der Abstand B in Figur 3c kleiner ist, als in Figur 3a und 3b. Das Bodenbearbeitungswerkzeug 6 verläuft demnach näher am Hindernis 4 vorbei als bei Fahrt ohne Hangwinkel β.

Daraus ist ersichtlich, dass der Betrag der Schwenkbewegung um die D Achse größer sein muss als in Figur 3a und 3b, um bei einer Bodenbearbeitungsfahrt Hindernisse 4 nicht zu kontaktieren. Es ist denkbar, dass im Vergleich zur Fahrt auf ebenem Untergrund der Stellbetrag S vergrößert werden muss um das Bodenbearbeitungswerkzeug im gleichen Abstand an Hindernissen vorbeiführen zu können, wie in Figur 3a und 3b

Es ist denkbar, dass der Stellbetrag S dem Wegunterschied ΔQ zwischen dem Abstand A und dem Abstand B entspricht. In Figur 3a sind der Abstand A und Abstand B gleich lang, womit ein Stellbetrag S bevorzugt alleine in Abhängigkeit vom Abstand der Maschine 1 zum Hindernis eingestellt werden würde. In Figur 3b entspricht der Stellbetrag S für das Zurückschwenken dann vorzugsweise dem Stellbetrag S aus Figur 3a minus dem Wegunterschied ΔQ. In Figur 3c würde demnach der Stellbetrag S dann bevorzugt dem Stellbetrag S aus Figur 3a plus dem Wegunterschied ΔQ entsprechen.

Da bevorzugt mindestens ein Abstand, bevorzugt der Abstand A bekannt sein muss um den Stellbetrag S in Abhängigkeit vom Hangwinkel β einstellen zu können, und der mechanische Taster 7a nicht erfassen kann an welcher Stelle in Querrichtung Q er das Hindernis 4 berührt, ist denkbar, dass bei der Ausführungsform mit einem mechanischen Taster 7a zumindest ein weiterer Entfernungssensor (hier nicht abgebildet) vorhanden ist, der auf Position der des Tasters 7a an der Drehachse D den Abstand A zwischen Drehachse D und Hindernis 4 misst. Weiterhin ist es denkbar, dass bei einer Ausführungsform mit kontaktlosem Sensor für die Hinderniserkennung (hier nicht abgebildet), der Sensor 7 ein Hindernis 4 nicht nur erfasst, sondern auch den Abstand A zu diesem ermittelt.

Bevorzugt sind die Stellbeträge S bei einer Maschine 1, welche ein Bodenbearbeitungswerkzeug 6 auf der Berg- und Talseite besitzt, bei beiden Bodenbearbeitungswerkzeugen 6 unterschiedlich einstellbar. Das Bodenbearbeitungswerkzeug 6 welches auf der Bergseite der Maschine 1 angeordnet ist, wird dann mit einem unterschiedlichen Stellbetrag S angesteuert, wie das Bodenbearbeitungswerkzeug 6, welches auf der Talseite der Maschine angeordnet ist.

Da das Bodenbearbeitungswerkzeug 6 immer nach einer bestimmten Zeit oder bevorzugt einer bestimmten Wegstrecke wieder in seine Ausgangsposition zurückkehrt ist es im Extremfall auf der, dem Berg zugewandten Seite sogar möglich, dass das Bodenbearbeitungswerkzeug 6 bereits vor Passieren des Hindernisses 4 wieder in seine Ursprungsposition vorgeklappt wird, sodass es mit dem Hindernis 4 kollidiert.

Die Abbildungen 3a bis 3c zeigen auch die Kippachse K um die die Drehachse D in der Ebene aus Höhenrichtung H und Querrichtung Q geschwenkt werden kann. Zusätzlich zeigt die Abbildung 3a die Kippvorrichtung 14 mit einem entsprechenden Verstellelement 77. Dabei ist die Kippvorrichtung 14 vorzugsweise so angebracht, dass bei einer Verlängerung und/oder Kontraktion des Verstellelementes 77 die Drehachse D um die Kippachse K geschwenkt wird. Vorzugsweise ist die Kippvorrichtung 14 starr am Fahrzeug 2 befestigt, wobei zumindest das Bodenbearbeitungswerkzeug 6, vorzugsweise aber die ganze Maschine 1, so an der Kippvorrichtung 14 befestigt ist, das sie um die Kippachse K schwenkbar sind. Bevorzugt schränkt das Verstellelement 77 diesen Freiheitsgrad insofern ein, als dass es den Betrag der Schwenkung um die Kippachse K einstellt.

Mit der erfindungsgemäßen Stellvorrichtung 10, der Regulierungsvorrichtung 11 und einem Sensor, welcher den Abstand A zwischen Maschine 1 und Hindernis 4 misst, kann ein Stellbetrag S eingestellt werden. Nach Detektion des Hindernisses 4 durch den Hindernissensor 7 findet das Zurückschwenken des Bodenbearbeitungswerkzeuges 6 nun um den Stellbetrag S statt. Je nachdem ob man sich in ebener Fahrt, oder Fahrt mit Hangwinkel β befindet, wird der Stellbetrag S auf der dem Berg zu- und abgewandten Seite der Maschine 1 entsprechend eingestellt.

Bevorzugt erfolgt die Berechnung des optimalen Stellbetrags S durch die Steuerungsvorrichtung 8 in Abhängigkeit der Signale des Hindernissensors 7, der aktuellen Fahrgeschwindigkeit des Fahrzeugs 2 in Fahrtrichtung F, der aktuellen Position des Bodenbearbeitungswerkzeugs 6, des Hangwinkels β und dem Abstand A zwischen Maschine 1 und Hindernis 4 in der Querrichtung Q. Der Stellbetrag wird in Abhängigkeit dieser Parameter so berechnet, dass das Zurückschwenken in einer Distanz zum Hindernis 4 erfolgt, welche dem hinterlegten Distanzwert entspricht.

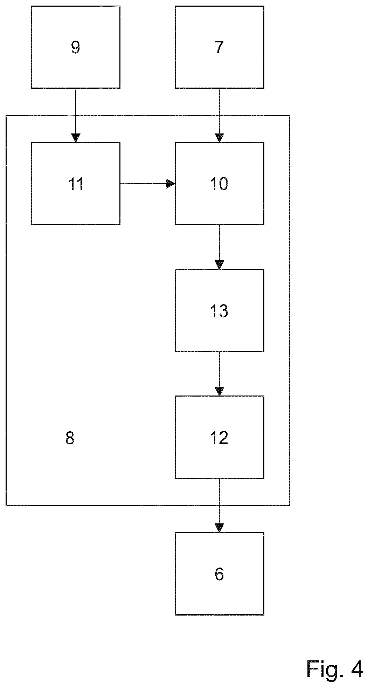

Bevorzugt umfasst die Maschine 1 eine vollautomatische Regulierungsvorrichtung 11 und einen Lagesensor 9. Mit dem Lagesensor 9 ist ein Hangwinkel β bestimmbar, wobei der Hangwinkel β eine seitliche Neigung der Maschine 1 und des Fahrzeugs 2 verursacht. Der detektierte Hangwinkel β wird dann vom Lagesensor 9 an die Steuerungsvorrichtung 8 weitergegeben. Eine entsprechende Steuerungsvorrichtung 8 ist schematisch in Figur 4 abgebildet. Die Steuerungsvorrichtung 8 umfasst die Stellvorrichtung 10 mit der Regulierungsvorrichtung 11, sowie einen Signalgeber 13 und eine Bewegungsvorrichtung 12. Mit der Bewegungsvorrichtung 12 ist das Bodenbearbeitungswerkzeug 6 aus der Bearbeitungsposition im Bodenbereich 3a zwischen Hindernissen 4 in eine Ruheposition nach hinten schwenkbar, was bedeutet, dass das Bodenbearbeitungswerkzeug 6 aus dem Bereich 3a zwischen zwei Hindernissen 4 herausschwenkbar ist.

Die Bewegungsvorrichtung 12 ist bevorzugt ein Hydraulikzylinder. Die Bewegungsvorrichtung 12 wird durch den Signalgeber 13 angesteuert. Alternativ kann die Bewegungsvorrichtung 12 als Schiebeeinheit 12 ausgeführt sein, welche das Bodenbearbeitungswerkzeug 6 in Querrichtung Q linear zur Maschine 1, oder von der Maschine 1 weg schiebt. Gibt der Signalgeber 13 ein Signal an die Bewegungsvorrichtung 12 wird das Bodenbearbeitungswerkzeug 6 aus dem Bereich 3a zwischen Hindernissen 4 entgegen der Fahrtrichtung F herausgeschwenkt. Bevorzugt ist der Signalgeber 13 ein elektromagnetisches Ventil. In dieser Ausführungsform ist der Hindernissensor 7 lediglich mittelbar über die Stellvorrichtung 10 mit dem Signalgeber 13 verbunden. Dies bedeutet, dass ein Sensorsignal des Hindernissensors 7 nicht unmittelbar an den Signalgeber 13 weitergegeben wird (was ein Zurückschwenken des Bodenbearbeitungswerkzeuges 6 um den normalen Schwenkbetrag auslösen würde), sondern das Sensorsignal zunächst in der Stellvorrichtung 10 an den Hangwinkel β angepasst wird, bevor es an den Signalgeber 13 weitergeleitet wird.

Der Stellbetrag S, um den die Stellvorrichtung 10 das den normalen Schwenkbetrag verändert, wird durch die Regulierungsvorrichtung 11 in Abhängigkeit vom Hangwinkel β bestimmt.

Mit dem Lagesensor 9 wird der Hangwinkel β in Querrichtung Q ermittelt. Der ermittelte Hangwinkel β wird dann an die Steuerungsvorrichtung 8 weitergeleitet, wo in Abhängigkeit des ermittelten Hangwinkels β, der aktuellen Fahrgeschwindigkeit des Fahrzeugs in Fahrtrichtung F, dem Abstand A zwischen Maschine 1 und Hindernis 4, und der aktuellen Position des Bodenbearbeitungswerkzeuges 6 ein Stellbetrag S ermittelt wird, welcher ein Zurückschwenken des Bodenbearbeitungswerkzeuges in einem vordefinierten Abstand zum Hindernis, welcher dem eingestellten Distanzwert entspricht, sicherstellt. Die Messung des Hangwinkels β durch den Lagesensor 9 findet bevorzugt kontinuierlich statt, sodass jederzeit der optimale Stellbetrag S für den momentanen Hangwinkel β mit der Regulierungsvorrichtung 11 in der Stellvorrichtung 10 eingestellt ist und das Bodenbearbeitungswerkzeug 6 immer in der korrekten Distanz am Hindernis 4 vorbeigeführt wird.

### Bezugszeichenliste

- 1: Maschine für die Bodenbearbeitung
- 2: Zugfahrzeug
- 3: Boden
- 3a: Bodenbereich
- 3e: Horizontale, waagerechte Ebene (Erdoberfläche)
- 4: Hindernisse
- 4a: Pflanzen
- 4b: Pflanzstock
- 5: Reihenkultur
- 6: Bodenbearbeitungswerkzeug
- 7: Hindernissensor
- 7a: mechanischer Taster
- 7b: kontaktloser Sensor
- 8: Steuerungsvorrichtung
- 9: Lagesensor
- 10: Stellvorrichtung
- 11: Reguliervorrichtung
- 11a: Regler
- 12: Bewegungsvorrichtung
- 13: Signalgeber
- 14: Kippvorrichtung
- 77: Verstellelement der Kippvorrichtung

- A: Abstand Drehachse - Hindernis in Höhe des Tasters
- B: Abstand Drehachse - Hindernis in Höhe des Bodenbearbeitungswerkzeuges
- D: Drehachse
- F: Fahrtrichtung
- H: Höhenrichtung
- K: Kippachse
- Q: Querrichtung
- S: Stellbetrag
- V: Vertikalrichtung
- β: Hang- oder Lotwinkel
- ΔQ: Streckendifferenz von A zu B

## Patentansprüche

1. Maschine für die Bodenbearbeitung (1) zur Anordnung an ein Zugfahrzeug (2), wobei bei Fahrt des Zugfahrzeugs (2) in einer Fahrtrichtung (F) ein Bodenbereich (3) mit einem Bodenbearbeitungswerkzeug (6) in einem Zwischenraum (3a) zwischen mindestens zwei Hindernissen (4) bearbeitbar ist, wobei die Maschine (1) eine Steuerungsvorrichtung (8) besitzt, mit der das Bodenbearbeitungswerkzeug (6) in den Zwischenraum (3a) hinein- und hinausschwenkbar und/oder in einer Querrichtung (Q) zur Maschine (1) hin und/oder von der Maschine weg in den Zwischenraum (3a) bewegbar ist, wobei die Steuerungsvorrichtung (8) eine Stellvorrichtung (10) umfasst, welche ein Hinein- und Hinausschwenken und/oder Bewegen des Bodenbearbeitungswerkzeuges (6) in der Querrichtung (Q) nach Detektion eines Hindernisses (4) um einen Stellbetrag (S) bewirkt,
**dadurch gekennzeichnet, dass**
die Steuerungsvorrichtung (8) weiterhin eine Regulierungsvorrichtung (11) enthält, die einem von einem Lagesensor (9) gemessenen Wert einen Stellbetrag (S) zuordnet und diesen Stellbetrag (S) an die Stellvorrichtung (10) übermittelt, wobei der vom Lagesensor (9) gemessene Wert ein Neigungswinkel ist, der einem Hangwinkel (β) entspricht, welcher zwischen der Querrichtung (Q) und einer waagerechten Ebene (3e) existiert, wobei diese waagerechte Ebene (3e) orthogonal zu einer lotrechten Vertikalrichtung (V) existiert, welche dem Erdmittelpunkt entspringt, oder der einem Lotwinkel (β) entspricht, welcher zwischen der Vertikalrichtung (V) und einer senkrecht auf der Querrichtung (Q) stehenden Höhenrichtung (H) existiert.

2. Maschine für die Bodenbearbeitung (1) nach Anspruch 1,
**dadurch gekennzeichnet, dass**
die Steuerungsvorrichtung (8) eine Bewegungsvorrichtung (12) umfasst, mit welcher das Bodenbearbeitungswerkzeug (6) schwenkbar ist und/oder in die Querrichtung (Q) bewegbar ist, und weiterhin einen durch die Stellvorrichtung (10) steuerbaren Signalgeber (13) umfasst, mit welchem die Bewegungsvorrichtung (12) ansteuerbar ist, wobei der Signalgeber (13) lediglich mittelbar über die Stellvorrichtung (10) mit dem Hindernissensor (7) verbunden ist.

3. Maschine für die Bodenbearbeitung (1) den Ansprüchen 1 und 2,
**dadurch gekennzeichnet, dass**
die Bewegungsvorrichtung (12) der Steuerungsvorrichtung (8) als Verstellelement (77) einer Kippvorrichtung (14)ausgebildet ist, mit welchem eine Drehachse (D), welche orthogonal zum Bodenbearbeitungswerkzeug (6) verläuft, in einem Winkel, bevorzugt aber parallel zur Vertikalrichtung (V) ausgerichtet werden kann.

4. Maschine für die Bodenbearbeitung (1) nach zumindest einem der vorherigen Ansprüche,
**dadurch gekennzeichnet, dass**
mit dem Lagesensor (9) der Hang- oder Lotwinkel (β) kontinuierlich messbar ist, wodurch mit der Regulierungsvorrichtung (11) der Stellbetrag (S) automatisch und kontinuierlich in Abhängigkeit des Hang- oder Lotwinkels (β) regulierbar ist.

5. Maschine für die Bodenbearbeitung (1) nach zumindest einem der vorherigen Ansprüche,
**dadurch gekennzeichnet, dass**
in der Steuerungsvorrichtung (8) zusätzlich zu den Signalen des Lagesensors (9) und eines Hindernissensors (7) auch die aktuelle Fahrgeschwindigkeit des Fahrzeugs, die aktuelle Position des Bodenbearbeitungswerkzeugs (6), sowie ein Abstandswert zwischen Maschine (1) und Hindernissen (4) in Querrichtung (Q) erfasst wird.

6. Maschine für die Bodenbearbeitung (1) nach zumindest einem der vorherigen Ansprüche,
**dadurch gekennzeichnet, dass**
die Stellvorrichtung (10) mit einem während der Bodenbearbeitungsfahrt manuell betätigbarem Schaltelement (11a) steuerbar ist und die Stellvorrichtung (10) als Regelelektronik ausgeführt ist.

7. Maschine für die Bodenbearbeitung (1) nach Anspruch 5,
**dadurch gekennzeichnet, dass**
der Hindernissensor (7) als mechanischer Taster (7a) ausgeführt ist, wobei eine Detektion eines Hindernisses (4) bei Überschreitung einer Mindestbetätigung des Tasters (7a) erfolgt.

8. Maschine für die Bodenbearbeitung (1) nach Anspruch 7,
**dadurch gekennzeichnet, dass**
der Taster (7a) als von der Fahrtrichtung (F) in die Querrichtung (Q) und parallel zum Boden (3) rotierbarer Stab ausgeführt ist, wobei die Mindestbetätigung einem Mindestdrehwinkel um die Drehachse (D) entspricht.

9. Maschine für die Bodenbearbeitung (1) nach zumindest einem der vorherigen Ansprüche,
**dadurch gekennzeichnet, dass**
der Hindernissensor (7) als kontaktloser Sensor (7b) ausgeführt ist.

10. Maschine für die Bodenbearbeitung (1) nach zumindest einem der vorherigen Ansprüche,
**dadurch gekennzeichnet, dass**
das Bodenbearbeitungswerkzeug (6) und der Hindernissensor (7) an der Drehachse (D) befestigt sind, woraus sich ein Abstand (A), welcher die Distanz zwischen einem Befestigungspunkt des Hindernissensors (7) an der Drehachse (D) und einem Hindernis (4) beschreibt, und ein Abstand (B), welcher die Distanz zwischen einem Befestigungspunkt des Bodenbearbeitungswerkzeugs (6) an der Drehachse (D) und einem Hindernis (4) beschreibt, ergibt.

11. Maschine für die Bodenbearbeitung (1) nach Anspruch 10,
**dadurch gekennzeichnet, dass**
ein Hangwinkel (β) bei Reihenkulturen (5), die parallel der Vertikalrichtung (V) wachsen, einen Wegunterschied (ΔQ) vom Abstand (A) zum Abstand (B) bewirkt, wobei der Stellbetrag (S) abhängig vom Wegunterschied (ΔQ) von der Regulierungsvorrichtung (11) bestimmt wird.

12. Verfahren zum Steuern eines Bodenbearbeitungswerkzeugs (6) einer Maschine (1) nach zumindest einem der vorhergehenden Ansprüche, umfassend die Schritte:
a) Einstellen des Stellbetrags (S) um den bei der Detektion eines Hindernisses (4) während einer Bodenbearbeitungsfahrt das Bodenbearbeitungswerkzeuges (6) mithilfe der Bewegungsvorrichtung (12) geschwenkt und/oder in Querrichtung (Q) bewegt wird;
b) Detektion eines Hindernisses (4) mit dem Hindernissensor (7);
c) Hinausschwenken und/oder Bewegen in Querrichtung (Q) zur Maschine (1) des Bodenbearbeitungswerkzeugs (6) aus dem Zwischenraum (3a) in Abhängigkeit vom Stellbetrag (S);
d) Hineinschwenken und/oder Bewegen in Querrichtung (Q) von der Maschine (1) des Bodenbearbeitungswerkzeugs (6) in den Zwischenraum (3) durch die Steuerungsvorrichtung (8).

13. Verfahren nach Anspruch 12,
**dadurch gekennzeichnet, dass**
mit dem Lagesensor (9) ein Hang- oder Lotwinkel (β) fortlaufend gemessen wird und der Stellbetrag (S) fortlaufend automatisch in Abhängigkeit des Hang- oder Lotwinkels (β) mit der Regulierungsvorrichtung (11) bestimmt wird.

14. Verfahren nach Anspruch 13,
**dadurch gekennzeichnet, dass,**
das Signal vom Lagesensor (9) mit mindestens einem Filter entrauscht wird um Unebenheiten im Boden (3) von einer tatsächlichen Änderung des Hangwinkels (β) unterscheiden zu können.

15. Verfahren nach einem der Ansprüche 12-14,
**dadurch gekennzeichnet, dass**
im Vergleich zum eingestellten Stellbetrag (S) bei ebener Fahrt, bei einer Fahrt mit seitlichem Hangwinkel (β) der Stellbetrag (S) auf der, dem Hang abgewandten Seite mit Hilfe der Regulierungsvorrichtung (11) verringert und auf der, dem Hang zugewandten Seite der Stellbetrag (S) mit Hilfe der Regulierungsvorrichtung (11) vergrö-ßert wird.

## Claims

1. Machine for soil cultivation (1) for arrangement on a towing vehicle (2), wherein, when the towing vehicle (2) is driving in a driving direction (F), a soil area (3) can be cultivated with a soil cultivation tool (6) in an intermediate space (3a) between at least two obstacles (4), wherein the machine (1) has a control device (8), by means of which the soil cultivating tool (6) can be pivoted into and out of the intermediate space (3a) and/or can be moved in a transverse direction (Q) towards the machine (1) and/or away from the machine into the intermediate space (3a), the control device (8) comprising an adjusting device (10) which effects a pivoting in and out and/or movement of the soil cultivating tool (6) in the transverse direction (Q) after detection of an obstacle (4) by an adjusting amount (S),
**characterized in that**
the control device (8) further includes a regulating device (11) which assigns a positioning amount (S) to a value measured by a position sensor (9) and transmits this positioning amount (S) to the actuating device (10), the value measured by the position sensor (9) being an angle of inclination corresponding to a slope angle (β) which exists between the transverse direction (Q) and a horizontal plane (3e), said horizontal plane (3e) existing orthogonally to a perpendicular vertical direction (V) originating from the center of the earth, or which corresponds to a perpendicular angle (β) existing between said vertical direction (V) and a height direction (H) perpendicular to said transverse direction (Q).

2. Machine for soil cultivation (1) according to claim 1,
**characterized in that**
the control device (8) comprises a movement device (12), with which the soil working tool (6) is pivotable and/or movable in the transverse direction (Q), and further comprises a signal transmitter (13) controllable by the actuating device (10), with which the movement device (12) is controllable, wherein the signal transmitter (13) is connected only indirectly via the actuating device (10) to the obstacle sensor (7).

3. Machine for soil cultivation (1) according to claims 1 and 2,
**characterized in that**
the movement device (12) of the control device (8) is designed as an adjusting element (77) of a tilting device (14) with which an axis of rotation (D), which runs orthogonally to the soil cultivation tool (6), can be aligned at an angle, but preferably parallel to the vertical direction (V).

4. Machine for soil cultivation (1) according to at least one of the preceding claims, **characterized in that**
the slope or plumb angle (β) is continuously measurable with the position sensor (9), whereby with the regulating device (11) the setting amount (S) can be automatically and continuously regulated in dependence on the slope or plumb angle (β).

5. Machine for soil cultivation (1) according to at least one of the previous claims, **characterized in that**
in the control device (8), in addition to the signals from the position sensor (9) and an obstacle sensor (7), the current driving speed of the vehicle, the current position of the soil cultivation tool (6), and a distance value between the machine (1) and obstacles (4) in the transverse direction (Q) are also detected.

6. Machine for soil cultivation (1) according to at least one of the previous claims, **characterized in that**
the actuating device (10) is controllable by means of a switching element (11a) which can be manually actuated during the soil cultivation drive, and the actuating device (10) is designed as an electronic control system.

7. Machine for soil cultivation (1) according to claim 5,
**characterized in that**
the obstacle sensor (7) is designed as a mechanical sensor (7a), wherein detection of an obstacle (4) takes place when a minimum actuation of the mechanical sensor (7a) is exceeded.

8. Machine for soil cultivation (1) according to claim 7,
**characterized in that**
the sensor (7a) is designed as a rod rotatable from the driving direction (F) in the transverse direction (Q) and parallel to the ground (3), the minimum actuation corresponding to a minimum angle of rotation about the axis of rotation (D).

9. Machine for soil cultivation (1) according to at least one of the previous claims, **characterized in that**
the obstacle sensor (7) is designed as a contactless sensor (7b).

10. Machine for soil cultivation (1) according to at least one of the previous claims, **characterized in that**
the soil cultivation tool (6) and the obstacle sensor (7) are fastened to the axis of rotation (D), resulting in a distance (A) describing the distance between a fastening point of the obstacle sensor (7) to the axis of rotation (D) and an obstacle (4), and a distance (B) describing the distance between a fastening point of the soil cultivation tool (6) to the axis of rotation (D) and an obstacle (4).

11. Machine for soil cultivation (1) according to claim 10,
**characterized in that**
a slope angle (β) causes a path difference (ΔQ) from the distance (A) to the distance (B) for row crops (5) growing parallel to the vertical direction (V), wherein the actuating amount (S) is determined by the regulating device (11) depending on the path difference (ΔQ).

12. Method for controlling a soil cultivation tool (6) of a machine (1) according to at least one of the preceding claims, comprising the steps:
a) setting the actuating amount (S) by which, upon detection of an obstacle (4) during a soil working drive, the soil working tool (6) is pivoted and/or moved in the transverse direction (Q) with the aid of the moving device (12);
b) detection of an obstacle (4) with the obstacle sensor (7);
c) pivoting and/or moving in the transverse direction (Q) towards the machine (1) of the soil cultivation tool (6) out of the intermediate space (3a) as a function of the actuating amount (S);
d) pivoting and/or moving in the transverse direction (Q) from the machine (1) of the soil cultivating tool (6) into the intermediate space (3) by the control device (8).

13. Method according to claim 12, **characterized in that**
a slope or plumb angle (β) is continuously measured with the position sensor (9) and the setting amount (S) is continuously determined automatically in dependence on the slope or plumb angle (β) with the regulating device (11).

14. Method according to claim 13,
**characterized in that**,
the signal from the position sensor (9) is denoised with at least one filter in order to be able to distinguish unevenness in the ground (3) from an actual change in the slope angle (β).

15. Method according to one of the claims 12-14,
**characterized in that**
in comparison to the set adjustment amount (S) during level driving, during driving with a lateral slope angle (β) the adjustment amount (S) on the side facing away from the slope is reduced with the aid of the regulating device (11) and on the side facing the slope the adjustment amount (S) is increased with the aid of the regulating device (11).

## Revendications

1. Machine pour le travail du sol (1) destinée à être montée sur un véhicule tracteur (2), dans laquelle, lors du déplacement du véhicule tracteur (2) dans une direction de déplacement (F), une zone de sol (3) peut être travaillée avec un outil de travail du sol (6) dans un espace intermédiaire (3a) entre au moins deux obstacles (4), la machine (1) possédant un dispositif de commande (8), avec lequel l'outil de travail du sol (6) peut être pivoté vers l'intérieur et vers l'extérieur dans l'espace intermédiaire (3a) et/ou peut être déplacé dans une direction transversale (Q) vers la machine (1) et/ou en s'éloignant de la machine dans l'espace intermédiaire (3a), le dispositif de commande (8) comprenant un dispositif de réglage (10) qui provoque un pivotement vers l'intérieur et vers l'extérieur et/ou un déplacement de l'outil de travail du sol (6) dans la direction transversale (Q) après détection d'un obstacle (4) autour d'une course de réglage (S),
**caractérisé en ce que**
le dispositif de commande (8) comprend en outre un dispositif de régulation (11) qui associe une valeur de réglage (S) à une valeur mesurée par un capteur de position (9) et transmet cette valeur de réglage (S) au dispositif de réglage (10), la valeur mesurée par le capteur de position (9) étant un angle d'inclinaison qui correspond à un angle de pente (β), qui existe entre la direction transversale (Q) et un plan horizontal (3e), ce plan horizontal (3e) existant orthogonalement à une direction verticale (V) qui provient du centre de la terre, ou qui correspond à un angle d'aplomb (β) qui existe entre la direction verticale (V) et une direction de hauteur (H) perpendiculaire à la direction transversale (Q).

2. Machine pour le travail du sol (1) selon la revendication 1,
**caractérisé en ce que**
le dispositif de commande (8) comprend un dispositif de déplacement (12) avec lequel l'outil de travail du sol (6) peut pivoter et/ou être déplacé dans la direction transversale (Q), et comprend en outre un générateur de signaux (13) pouvant être commandé par le dispositif de réglage (10), avec lequel le dispositif de déplacement (12) peut être commandé, le générateur de signaux (13) n'étant relié qu'indirectement au capteur d'obstacles (7) par le biais du dispositif de réglage (10).

3. Machine pour le travail du sol (1) selon les revendications 1 et 2,
**caractérisé en ce que**
le dispositif de déplacement (12) du dispositif de commande (8) est conçu comme un élément de réglage (77) d'un dispositif de basculement (14), avec lequel un axe de rotation (D), qui est orthogonal à l'outil de travail du sol (6), peut être orienté selon un angle, mais de préférence parallèlement à la direction verticale (V).

4. machine pour le travail du sol (1) selon au moins une des revendications précédentes,
**caractérisé en ce que**
le capteur de position (9) permet de mesurer en continu l'angle de pente ou d'aplomb (β), ce qui permet de régler automatiquement et en continu la valeur de réglage (S) en fonction de l'angle de pente ou d'aplomb (β) à l'aide du dispositif de régulation (11).

5. Machine pour le travail du sol (1) selon au moins l'une des revendications précédentes,
**caractérisé en ce que**
dans le dispositif de commande (8), en plus des signaux du capteur de position (9) et d'un capteur d'obstacles (7), la vitesse de déplacement actuelle du véhicule, la position actuelle de l'outil de travail du sol (6), ainsi qu'une valeur de distance entre la machine (1) et les obstacles (4) dans le sens transversal (Q) sont également enregistrées.

6. Machine pour le travail du sol (1) selon au moins une des revendications précédentes,
**caractérisé en ce que**
le dispositif de réglage (10) peut être commandé par un élément de commutation (11a) pouvant être actionné manuellement pendant le déplacement de travail du sol et le dispositif de réglage (10) est réalisé sous forme d'électronique de régulation.

7. Machine pour le travail du sol (1) selon la revendication 5, **caractérisé en ce que**
le capteur d'obstacle (7) est réalisé sous la forme d'un palpeur mécanique (7a), une dé-tection d'un obstacle (4) ayant lieu en cas de dépassement d'un actionnement minimal du palpeur (7a).

8. Machine pour le travail du sol (1) selon la revendication 7,
**caractérisé en ce que**
le palpeur (7a) est réalisé sous la forme d'une tige pouvant tourner par rapport à la direction de déplacement (F) dans la direction transversale (Q) et parallèlement au sol (3), l'actionnement minimal correspondant à un angle de rotation minimal autour de l'axe de rotation (D).

9. Machine pour le travail du sol (1) selon au moins une des revendications précédentes,
**caractérisé en ce que**
le capteur d'obstacle (7) est un capteur sans contact (7b).

10. Machine pour le travail du sol (1) selon au moins une des revendications précédentes,
**caractérisé en ce que**
l'outil de travail du sol (6) et le capteur d'obstacles (7) sont fixés à l'axe de rotation (D), ce qui donne une distance (A) qui décrit la distance entre un point de fixation du capteur d'obstacles (7) sur l'axe de rotation (D) et un obstacle (4), et une distance (B) qui décrit la distance entre un point de fixation de l'outil de travail du sol (6) sur l'axe de rotation (D) et un obstacle (4).

11. Machine pour le travail du sol (1) selon la revendication 10,
**caractérisé en ce que**
un angle de pente (β) provoque une différence de course (ΔQ) entre la distance (A) et la distance (B) pour les cultures en ligne (5) qui croissent parallèlement à la direction verticale (V), la valeur de réglage (S) étant déterminée par le dispositif de régulation (11) en fonction de la différence de course (ΔQ).

12. Procédé de commande d'un outil de travail du sol (6) d'une machine (1) selon au moins l'une des revendications précédentes, comprenant les étapes suivantes :
a) Réglage de la valeur de réglage (S) de laquelle l'outil de travail du sol (6) est pivoté et/ou déplacé dans la direction transversale (Q) à l'aide du dispositif de déplacement (12) lors de la détection d'un obstacle (4) pendant un trajet de travail du sol ;
b) détection d'un obstacle (4) à l'aide du capteur d'obstacle (7) ;
c) pivotement vers l'extérieur et/ou déplacement dans la direction transversale (Q) vers la machine (1) de l'outil de travail du sol (6) hors de l'espace intermédiaire (3a) en fonction de la valeur de réglage (S) ;
d) pivotement et/ou déplacement transversal (Q) de la machine (1) de l'outil de travail du sol (6) vers l'espace intermédiaire (3) par le dispositif de commande (8).

13. Procédé selon la revendication 12,
**caractérisé en ce que**
un angle de pente ou d'aplomb (β) est mesuré en continu par le capteur de position (9) et la valeur de réglage (S) est déterminée automatiquement en continu en fonction de l'angle de pente ou d'aplomb (β) par le dispositif de régulation (11).

14. Procédé selon la revendication 13,
**caractérisé en ce que**,
le signal provenant du capteur de position (9) est débruité à l'aide d'au moins un filtre afin de pouvoir distinguer les irrégularités du sol (3) d'une variation réelle de l'angle de pente (β).

15. Procédé selon l'une quelconque des revendications 12 à 14,
**caractérisé en ce que**
par rapport à la valeur de réglage (S) réglée en conduite à plat, lors d'une conduite avec un angle de pente latéral (β), on diminue la valeur de réglage (S) sur le côté opposé à la pente à l'aide du dispositif de régulation (11) et on augmente la valeur de réglage (S) sur le côté tourné vers la pente à l'aide du dispositif de régulation (11).
